# EUROPEAN PATENT APPLICATION

(11) **EP 4 621 965 A1**
(43) Date of publication of application: **24.09.2025**
(21) Application number: 23932762.0
(22) Date of filing: 03.11.2023
(51) Int. Cl.: H01M 50/30

(54) **BATTERY CELL, BATTERY, AND ELECTRICAL APPARATUS**

(30) Priority: 12.04.2023 CN 202310389480
(71) Applicant: Contemporary Amperex Technology Co., Limited, Ningde, Fujian 352100 (CN)
(72) Inventor: CHAI, Zhisheng, Ningde, Fujian 352100 (CN); GU, Hui, Ningde, Fujian 352100 (CN)
(74) Representative: Ran, Handong
(86) International application number: PCT/CN2023/129667
(87) International publication number: WO 2024/212491

(57) **Abstract**

The present application discloses a battery cell, a battery, and an electrical apparatus. The battery cell comprises a casing, an electrode assembly, and an electrode terminal. The casing comprises a wall portion, and the wall portion is provided with an electrode lead-out hole. At least a part of the electrode assembly is accommodated in the casing, and the electrode assembly comprises a tab. The electrode terminal is arranged on the wall portion and covers at least a part of the electrode lead-out hole. The electrode terminal is electrically connected to the tab. The electrode terminal can deform under the condition that the internal pressure or temperature of the casing reaches a threshold, so that the internal space of the casing is communicated with the external space by means of the electrode lead-out hole.

## Description

### CROSS-REFERENCE TO RELATED APPLICATIONS

The present application claims priority to Chinese Patent Application 202310389480.4, entitled "BATTERY CELL, BATTERY, AND ELECTRICAL APPARATUS" filed with the Chinese Patent Office on April 12, 2023, which is incorporated by reference in the present application.

### TECHNCIAL FIELD

The present application relates to the field of batteries, and particularly relates to a battery cell, a battery, and an electrical apparatus.

### BACKGROUND

With the development of battery technology, battery cells are used in more and more fields, and have gradually replaced traditional fossil energy in the field of automotive power. Battery cells can store chemical energy and convert it into electrical energy in a controlled manner. In recyclable battery cells, active substances can be activated by charging for reuse after discharge.

How to improve the reliability of the battery cells is an important research direction in the industry.

### SUMMARY

The present application provides a battery cell, a battery, and an electrical apparatus, which can improve the reliability.

In a first aspect, the present application provides a battery cell, which includes a casing, an electrode assembly, and an electrode terminal. The casing comprises a wall portion, and the wall portion is provided with an electrode lead-out hole. At least a part of the electrode assembly is accommodated in the casing, and the electrode assembly comprises a tab. The electrode terminal is arranged on the wall portion and covers at least a part of the electrode lead-out hole. The electrode terminal is electrically connected to the tab. At least a part of the electrode terminal can deform under a condition in which the internal pressure or temperature of the casing reaches a threshold, so that the internal space of the casing communicates with the external space through the electrode lead-out hole, and gas in the casing is discharged.

Under the condition in which the internal pressure or temperature of the casing reaches the threshold, in the above technical solution, the deformation of the electrode terminal can be utilized to communicate the internal space of the casing with the external space, and therefore, internal gas and pressure of the casing can be discharged, and the risk of explosion of the battery cell can be reduced. Compared with a solution of additionally arranging a pressure relief mechanism on the casing, the above technical solution has the advantage that the structure of the battery cell can be simplified, thus reducing the cost of the battery cell.

In some embodiments, at least a part of the electrode terminal can be isolated from the wall portion under the condition in which the internal pressure or temperature of the casing reaches the threshold.

When at least a part of the electrode terminal is isolated from the wall portion, at least part of the electrode lead-out hole is not covered by the electrode terminal any more, and the electrode lead-out hole can communicate the internal space of the casing with the external space to discharge the internal gas from the battery cell, thereby reducing the internal pressure and temperature of the battery cell.

In some embodiments, the electrode terminal includes a protrusion that protrudes from a hole wall of the electrode lead-out hole in the radial direction of the electrode lead-out hole, and the protrusion is located on the side of the wall portion facing the electrode assembly and can deform under the condition in which the internal pressure or temperature of the casing reaches the threshold.

In the normal operation process of the battery cell, the wall portion can block the protrusion to reduce the risk that the electrode terminal falls off from the electrode lead-out hole. Under the condition that the internal pressure or temperature of the casing reaches the threshold, the protrusion can deform to make the wall portion do not block the protrusion any more, thus the electrode terminal can fall off from the electrode lead-out hole, then the internal space of the casing is communicated with the external space by means of the electrode lead-out hole, gas in the casing can be discharged through the electrode lead-out hole, and the risk of explosion of the battery cell is reduced.

In some embodiments, the maximum size of the protrusion protruding from the hole wall of the electrode lead-out hole is L1, and the minimum space between a circumferential edge of the wall portion and the hole wall of the electrode lead-out hole is L2; and L1 and L2 meet: 0.1≤L1/L2≤0.5.

When the value of L1/L2 is limited to be less than or equal to 0.5, the deformation can be caused in time under the condition that the internal pressure or temperature of the casing reaches the threshold, and thus the reliability of the battery cell is improved. When the value of L1/L2 is limited to be more than or equal to 0.1, the stability of the electrode terminal on the wall portion can be improved, and the risk that the electrode terminal falls off when the battery cell is subjected to external impact is reduced.

In some embodiments, the maximum size of the protrusion protruding from the hole wall of the electrode lead-out hole is L1, and the maximum thickness of the protrusion is T1; and L1 and T1 meet: 0.25mm²≤L1×T1≤25mm².

When the value of L1xT1 is limited to be less than or equal to 25 mm², the deformation can be caused in time under the condition that the internal pressure or temperature of the casing reaches the threshold, and thus the reliability of the battery cell is improved. When the value of L1xT1 is limited to be more than or equal to 0.25 mm², the stability of the electrode terminal on the wall portion can be improved, and the risk that the electrode terminal falls off when the battery cell is subjected to external impact is reduced.

In some embodiments, T1 is 0.5-5 mm. When T1 is limited to be 0.5-5 mm, the deformation can be caused in time under the condition that the internal pressure or temperature of the casing reaches the threshold, and thus the risk that the electrode terminal falls off when the battery cell is subjected to external impact is reduced.

In some embodiments, in the direction from a central axis of the electrode lead-out hole to a peripheral edge of the protrusion, the thickness of at least a part of the protrusion gradually decreases.

A thickness-variable area with gradually-decreased thickness is arranged on the protrusion, so that the protrusion can easily deform with the internal pressure, the pressure relief can be carried out in time, and the reliability of the battery cell can be improved.

In some embodiments, the protrusion is provided with a first surface facing the wall portion, the wall portion is provided with a second surface facing the protrusion, the second surface is in a direction perpendicular to the thickness direction of the wall portion, and the first surface is inclined in the direction toward the electrode assembly relative to the second surface; and in the thickness direction of the wall portion, the distance from the end of the first surface away from the electrode lead-out hole to the second surface is larger than the distance from the end of the first surface close to the electrode lead-out hole to the second surface.

Under the condition in which the internal pressure or temperature of the casing reaches the threshold, the inclined first surface can guide the protrusion to deform to easily penetrate out of the electrode lead-out hole, thus pressure relief can be carried out in time, and the reliability of the battery cell can be improved.

In some embodiments, the electrode terminal includes a terminal body and a first limiting portion which are connected to each other, at least part of the terminal body is accommodated in the electrode lead-out hole, and the first limiting portion is located on the side of the wall portion facing the electrode assembly and protrudes out of a peripheral surface of the terminal body. The first limiting portion includes the protrusion.

The terminal body extends into the electrode lead-out hole, so that the electrode terminal can be conveniently connected to other components outside the battery cell. The wall portion blocks the protrusion, thereby preventing the electrode terminal from being isolated from the interior of the casing.

In some embodiments, the first limiting portion is provided with a weak portion, and the first limiting portion can be bent or broken along the weak portion under the condition in which the internal pressure or temperature of the casing reaches the threshold.

The weak portion is arranged on the first limiting portion, so that the deformation difficulty of the first limiting portion can be reduced under the condition that the internal pressure or temperature of the casing reaches the threshold, the first limiting portion can be bent or broken from a preset position, then the internal space of the casing is communicated with the external space by means of the electrode lead-out hole, and the risk of explosion of the battery cell can be reduced.

In some embodiments, at least a part of the projection of the weak portion in the thickness direction of the wall portion is within the electrode lead-out hole.

According to the above technical solution, under the condition that the internal pressure or temperature of the casing reaches the threshold, the bent portion of the first limiting portion is close to the electrode lead-out hole, and therefore, the first limiting portion can penetrate out of the electrode lead-out hole more easily.

In some embodiments, the first limiting portion includes the protrusion and a connecting portion, in which, the connecting portion is configured to connect the protrusion to the terminal body, and the projection of the connecting portion in the thickness direction of the wall portion is between the peripheral surface of the terminal body and the hole wall of the electrode lead-out hole. The weak portion is arranged on the connecting portion.

Under the condition that the internal pressure or temperature of the casing reaches the threshold, the protrusion can be turned over along with the bending of the weak portion so as to avoid the wall portion and penetrate out of the electrode lead-out hole. The weak portion is arranged on the connecting portion, so that the limitation on the strength of the protrusion can be reduced, and the shape of the protrusion is more flexible in design.

In some embodiments, the electrode terminal is provided with a notch groove, and the weak portion is formed at the bottom of the notch groove. The weak portion is formed in a mode of forming the notch groove, which improves the forming efficiency of the electrode terminal.

In some embodiments, the notch groove is formed in the surface of the first limiting portion facing the wall portion.

In some embodiments, the notch groove is formed in the surface of the first limiting portion away from the wall portion. Under the condition that the internal pressure or temperature of the casing reaches the threshold, the notch groove can provide a space for the material to flow, which is conducive to bending of the first limiting portion.

In some embodiments, the electrode terminal is provided with a recess. In the thickness direction of the wall portion, the recess is sunken from the interior of the casing to the exterior of the casing; and at least a part of the recess is arranged on the side of the terminal body facing the tab.

Under the condition that the internal pressure or temperature of the casing reaches the threshold, the first limiting portion is bent; and the recess can provide a space for the material to flow in the bending process of the first limiting portion, thus the bending resistance of the first limiting portion is reduced, and the first limiting portion can penetrate out of the electrode lead-out hole in time.

**In** some embodiments, the recess includes a first side surface and a second side surface, in which, the first side surface is arranged on the outer side of the second side surface in the radial direction of the electrode lead-out hole, and the first side surface is connected to the bottom surface of the recess and is inclined in a direction away from the central axis of the electrode terminal.

The first side surface is inclined, so that when the first limiting portion is bent, more space can be provided for the material to flow, and the bending resistance of the first limiting portion can be reduced.

In some embodiments, the recess includes a first side surface and a second side surface, in which, the first side surface is arranged on the outer side of the second side surface in the radial direction of the electrode lead-out hole, and the second side surface is connected to the bottom surface of the recess and is inclined in a direction toward the central axis of the electrode terminal.

The second side surface is inclined, so that when the first side surface is deformed due to material flowing, the risk of interference between the second side surface and the first side surface can be reduced, and the bending resistance of the first limiting portion can be reduced.

In some embodiments, the first limiting portion can be bent in the direction toward the recess under the condition in which the internal pressure or temperature of the casing reaches the threshold.

Under the condition that the internal pressure or temperature of the casing reaches the threshold, the first limiting portion is bent in the direction close to the recess, so that the material flows towards the recess, the bending resistance of the first limiting portion can be reduced, and the first limiting portion can penetrate out of the electrode lead-out hole in time.

In some embodiments, the first limiting portion is formed by folding a part of the electrode terminal.

During assembling, the electrode terminal can extend into the casing by means of the electrode lead-out hole, and then a part of the electrode terminal is folded to form the first limiting portion, and thus the fixation of the electrode terminal and the wall portion is realized.

In some embodiments, the terminal body includes a terminal protrusion, and the recess is arranged around the terminal protrusion. In the thickness direction of the wall portion, an end surface of the terminal protrusion facing the tab is closer to the tab than the first limiting portion.

The first limiting portion is not easy to interfere with the abutting of the terminal protrusion and other components, so that the over-positioning is reduced, the risk of poor contact between the terminal protrusion and other components due to unevenness of the first limiting portion is reduced, and the overcurrent capacity and the reliability of the battery cell are improved.

In some embodiments, the electrode terminal further includes a second limiting portion, and the second limiting portion protrudes from the peripheral surface of the terminal body and is arranged on the outer side of the wall portion. In the thickness direction of the wall portion, at least part of the wall portion is located between the protrusion and the second limiting portion. The wall portion can be limited between the first limiting portion and the second limiting portion to limit relative motion between the electrode terminal and the wall portion.

In some embodiments, in the radial direction of the electrode lead-out hole, an end portion of the second limiting portion away from the terminal body exceeds an end portion of the first limiting portion away from the terminal body.

In the radial direction of the electrode lead-out hole, the second limiting portion has a larger size relative to the first limiting portion, which increases the exposed area of the electrode terminal, facilitates the connection of the electrode terminal to an external confluence component, increases the connection area of the electrode terminal and the confluence component, and improves the overcurrent capacity. In the radial direction of the electrode lead-out hole, the first limiting portion has a larger size relative to the second limiting portion, so that the first limiting portion is easier to deform under the condition that the internal pressure or the temperature of the casing reaches the threshold, then the pressure relief can be carried out in time, and the reliability of the battery cell can be improved.

In some embodiments, the first limiting portion, the second limiting portion and the terminal body are of an integrally formed structure, which improves the overall structural strength of the electrode terminal, reduces the internal resistance of the electrode terminal, and improves the overcurrent capacity.

In some embodiments, the battery cell further includes a sealing member, and at least part of the sealing member is arranged between the first limiting portion and the wall portion. The sealing member can fill a gap between the first limiting portion and the wall portion so as to seal the electrode lead-out hole.

In some embodiments, the melting point of the electrode terminal is smaller than that of the wall portion. In a case of short circuit or overcharge or other phenomena, the internal temperature of the casing will rapidly increase. The electrode terminal has a lower melting point than the wall portion, thus the electrode terminal can be melted or softened prior to the wall portion, which is conducive to the directional pressure relief of the battery cell.

In some embodiments, the melting point of the electrode terminal is H1, the melting point of the wall portion is H2, and H2-H1≥300°C.

In a case of short circuit or overcharge or other phenomena, the internal temperature of the casing is uneven; according to the above technical solution, there may be a large difference between the melting point of the electrode terminal and the melting point of the wall portion, so the risk that the wall portion is melted prior to the electrode terminal due to uneven internal temperature will be reduced, and the reliability of the battery cell is improved.

In some embodiments, the materials of the electrode terminal include aluminum or copper, and the materials of the wall portion include steel.

The main material of the wall portion is steel, so that the wall portion has good mechanical strength and high temperature resistance, and the risk that the wall portion is melted and broken when the battery cell is out of heat control is reduced. The material of the electrode terminal has a lower melting point, so when the battery cell is out of heat control, the electrode terminal is softened and deformed more easily, the internal space of the casing can be communicated with the external space by means of the electrode lead-out hole in time, the explosion risk can be reduced, and the reliability of the battery cell can be improved.

In some embodiments, the casing includes a casing body and an end cover, an opening is formed in one end of the casing body, and the end cover covers the opening; the casing body includes a side wall and an end wall; the side wall surrounds the outer side of the electrode assembly; the end wall and the opening are arranged oppositely; and the wall portion is the end cover or the end wall.

Compared with the side wall, the end cover or the end wall is more flat; and the electrode terminal is arranged on the end cover or the end wall so that the assembling efficiency of the battery cell can be improved.

In some embodiments, the projection of the wall portion in the thickness direction is rectangular or annular.

In a second aspect, the present application provides a battery which includes a plurality of battery cells provided by any one embodiment in the first aspect.

In a third aspect, the present application provides an electrical apparatus which includes the battery provided in the second aspect, and the battery is configured to provide electric energy.

### BRIEF DESCRIPTION OF THE DRAWINGS

The features, advantages and technical effects of the exemplary embodiments of the present application will be described with reference to the accompanying drawings.
FIG. 1 is a structural schematic diagram of a vehicle provided by some embodiments of the present application;
FIG. 2 is an explosive schematic diagram of a battery provided by some embodiments of the present application;
FIG. 3 is a structural schematic diagram of a battery module shown in FIG. 2;
FIG. 4 is a structural schematic diagram of a battery cell provided by some embodiments of the present application;
FIG. 5 is a section-view schematic diagram of a battery cell shown in FIG. 4;
FIG. 6 is an amplification diagram of a round frame in FIG. 5;
FIG. 7 is a partial section-view schematic diagram of a casing body of a battery cell provided by some embodiments of the present application;
FIG. 8 is a section-view schematic diagram of an electrode terminal of a battery cell provided by some embodiments of the present application;
FIG. 9 is a local sectional-view schematic diagram of a battery cell provided by some embodiments of the present application;
FIG. 10 is a schematic diagram of an electrode terminal shown in FIG. 9;
FIG. 11 is a section-view schematic diagram of an electrode terminal of a battery cell provided by some other embodiments of the present application;
FIG. 12 is a local sectional-view schematic diagram of a battery cell provided by some embodiments of the present application;
FIG. 13 is a section-view schematic diagram of an electrode terminal shown in FIG. 12;
FIG. 14 is a section-view schematic diagram of an electrode terminal of a battery cell provided by some other embodiments of the present application;
FIG. 15 is a local section-view schematic diagram of a battery cell provided by some other embodiments of the present application;
FIG. 16 is a section-view schematic diagram of an electrode terminal shown in FIG. 15;
FIG. 17 is a three-dimensional structural schematic diagram of a battery cell provided by some other embodiments of the present application.

The accompanying drawings may not be drawn to actual scale.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the examples of the present application rather than all the embodiments. Based on the embodiments in the present application, all other embodiments obtained by ordinary technicians in this field without creative work belong to the protection scope of the present application.

For the purpose of making objects, technical schemes and advantages of the present application more clear, clear and complete description will be made to the technical solutions of the present application in cooperation with accompanying drawings in the embodiments of the present application . Definitely, the described embodiments are merely a part of the embodiments of the present application and not all the embodiments. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

**In** the present application, the "plurality of" refers to more than two (including two).

**In** the embodiments of the present application, the battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. The example of the lithium-containing phosphate may include but is not limited to at least one of a group consisting of lithium iron phosphate (such as LiFePO₄ (LFP for short), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of lithium transition metal oxides may include, but are not limited to the group consisting of lithium cobalt oxides (e.g., LiCoO₂), lithium nickel oxides (e.g., LiNiO₂), lithium-manganese oxides (e.g., LiMnO₂, LiMn₂O₄), lithium nickel cobalt oxides, lithium manganese cobalt oxides, lithium nickel manganese oxides (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (can also be abbreviated as NCM₆₂₂), LiNi_{0.8}Co_{0.1}Mn_{0.1}O₂ (can also be abbreviated as NCM₈₁₁), lithium nickel cobalt aluminum oxides (e.g., LiNi_{0.80}Co_{0.15}Al_{0.05}O₂) and modified compounds thereof.

In some embodiments, the positive electrode may adopt metal foam. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate can include a negative electrode current collector.

For example, a metal foil, a foam metal, or a composite current collector may be used as the negative electrode current collector. For example, as the metal foil, silver surface-treated aluminum or stainless steel, stainless steel, copper, aluminum, nickel, baked carbon, carbon, nickel, titanium, or the like can be used. The foam metal may be foam nickel, foam copper, foam aluminum, foam alloy, or foam carbon, etc. The composite current collector may include a high molecular material substrate layer and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

For example, each negative electrode plate may include a negative electrode current collector and a negative active material arranged on at least one surface of the negative electrode current collector.

For example, the negative electrode current collector has two surfaces opposite to each other in its own thickness direction, and the negative active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

**In** some embodiments, the material of the positive electrode current collector may be aluminum, and the material of the negative electrode current collector may be copper.

**In** some embodiments, the electrode assembly further includes a spacer, and the spacer is arranged between the positive electrode and the negative electrode.

**In** some embodiments, the spacer is an isolation film. The type of the separator is not particularly limited in the present application, and any well-known separator having good chemical stability, mechanical stability, and a porous structure may be selected.

As an example, the main material of the separator may be selected from at least one of glass fiber, nonwoven fabric, polyethylene, polypropylene, polyvinylidene fluoride, and ceramic. The separator may be a single-layer film, or may be a multi-layer composite film, which is not particularly limited. When the separator is a multi-layer composite film, the material in each layer may be same or different, which is not particularly limited. The spacer may be a separate component located between the positive electrode and the negative electrode, or may be attached to the surface of the positive electrode and the surface of the negative electrode.

In some embodiments, the spacer is a solid electrolyte. The solid electrolyte is arranged between the positive electrode and the negative electrode and plays a role of transmitting ions and isolates the positive electrode from the negative electrode.

In some implementations, the battery cell further includes an electrolyte. The electrolyte plays a role of conducting ions between the positive electrode and the negative electrode. The present application does not impose a specific limitation on the type of the electrolyte, and can select the electrolyte according to a need. The electrolyte may be in a liquid state, a gel state, or a solid state.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. An ether solvent may also be used as the solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, cellulose, or the like.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

For example, the composite solid electrolyte is formed by adding an inorganic solid electrolyte filler into a polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tab includes a positive tab and a negative tab.

In some implementations, the battery cell may include a shell. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

For example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

A battery mentioned in the embodiments of the present application is a single physical module including one or a plurality of battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage electric cabinet and the like.

In some embodiments, the battery cell usually includes an electrode assembly, an electrode terminal and a casing. The electrode assembly is electrically connected to the outside by means of the electrode terminal. The casing can accommodate the electrode assembly and support the electrode assembly.

In a case of short circuit or overcharge or other phenomena, the interior of the battery cell may be out of heat control, which causes sudden increase of the internal pressure of the casing, resulting in a risk of explosion of the battery cell.

In view of above, an embodiment of the present application provides a battery cell, which can utilize the deformation of the electrode terminal to communicate the internal space of the casing with the external space under the condition that the internal pressure or temperature of the casing reaches a threshold, thereby relieving the internal pressure of the battery cell and reducing the risk of explosion of the battery cell. Compared with a solution of additionally arranging a pressure relief mechanism on the casing, the structure of the battery cell can be simplified in the present application.

The battery cell in the embodiments of the present application is suitable for a battery and an electrical apparatus using the battery.

The battery cell, the battery, and the electrical apparatus disclosed by the embodiments of the present application can be used in the electrical apparatus using the battery as a power supply or various energy storage systems using the battery as an energy storage element. The electrical apparatus can be but not limited to mobile phones, tablet computers, notebook computers, electric toys, electric tools, electric vehicles, electric automobiles, ships, spacecraft and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

The following embodiment, for the sake of convenience, are illustrated with an example of the electrical device for the vehicle.

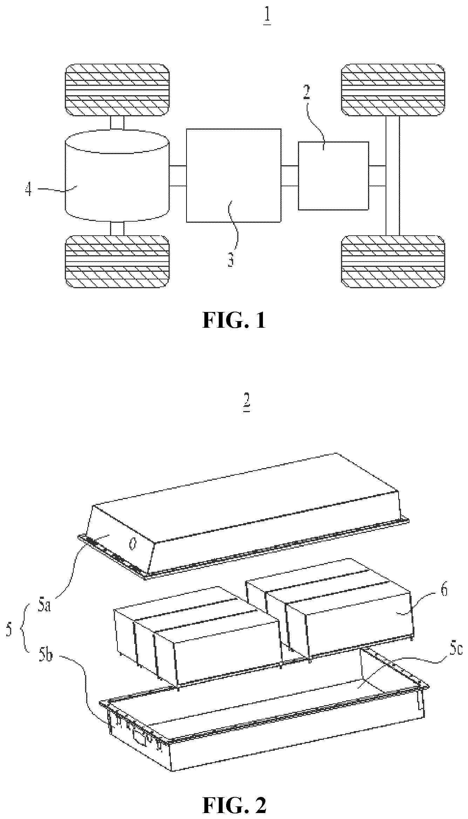

Fig. 1 is a schematic structural diagram of a vehicle according to some embodiments of the present application.

As shown in Fig. 1, the interior of the vehicle 1 is provided with a battery 2, and the battery 2 may be arranged at the bottom or head or tail of the vehicle 1. The battery 2 may be used to power the vehicle 1. For example, the battery 2 may be used as an operating power source of the vehicle 1.

The vehicle 1 may further include a controller 3 and a motor 4. The controller 3 is used to control the battery 2 to power the motor 4, for example, for meeting operating power requirements when the vehicle 1 is starting, navigating, and driving.

In some embodiments of the present application, the battery 2 can not only be used as the operating power source of the vehicle 1, but also be used as a driving power source of the vehicle 1 to replace or partially replace fuel or natural gas to provide driving power for the vehicle 1.

FIG. 2 is an exploded schematic diagram of a battery provided by some embodiments of the present application. As shown in FIG. 2, the battery 2 includes a box 5 and a battery cell (not shown in FIG. 2); and the battery cell is accommodated within the box 5.

The box 5 is configured to accommodate the battery and may be in various structural forms. In some embodiments, the box 5 may include a first box part 5a and a second box part 5b; the first box part 5a and the second box part 5b are mutually covered; the first box part 5a and the second box part 5b jointly define an accommodating space 5c used for accommodating the battery cell. The second box part 5b may be of a hollow structure with an opening formed in one end; the first box part 5a is of a plate-shaped structure, and the first box part 5a covers the opening side of the second box part 5b to form the box 5 with the accommodating space 5c; each of the first box part 5a and the second box part 5b may also be of a hollow structure with an opening formed in one side; and the opening side of the first box part 5a covers the opening side of the second box part 5b to form the box 5 with the accommodating space 5c. Definitely, the first box part 5a and the second box part 5b may be in various shapes, such as cylinders and cuboids.

In order to improve the sealing performance after the first box part 5a and the second box part 5b are connected, a sealing member such as a sealant and a sealing ring may also be arranged between the first box part 5a and the second box part 5b.

It is assumed that the first box part 5a covers the top of the second box part 5b, the first box part 5a can also be called as an upper box cover, and the second box part 5b can also be called as a lower box.

In the battery 2, one or a plurality of battery cells can be arranged. If a plurality of battery cells are arranged, the plurality of battery cells can be connected in series or in parallel or in series-parallel connection; and series-parallel connection refers to that the plurality of battery cells are connected in series and in parallel. The plurality of battery cells can be directly connected in series or in parallel or in series-parallel connection, and then the whole body formed by the plurality of battery cells is accommodated in the box 5; definitely, the plurality of battery cells can be connected in series or in parallel or in series-parallel connection to form the battery module 6; and a plurality of batteries modules 6 are connected in series or in parallel or in series-parallel connection as a whole and are accommodated in the box 5.

The battery cell may be the minimum unit which forms the battery.

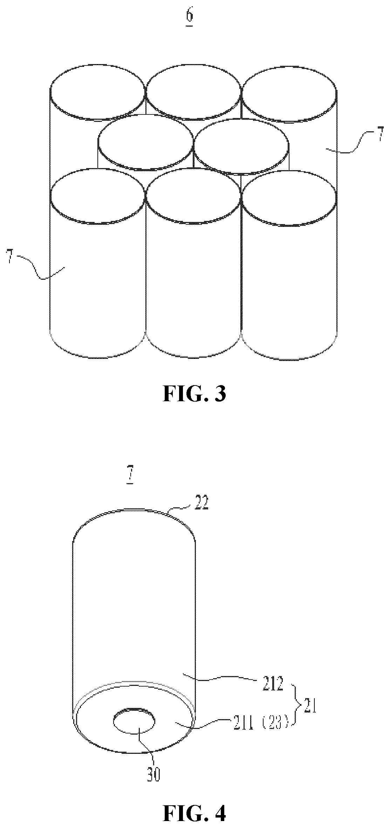

FIG. 3 is a structural schematic diagram of a battery module shown in FIG. 2.

In some embodiments, as shown in FIG. 3, a plurality of battery cells 7 are provided, and the plurality of battery cells 7 are connected in series or in parallel or in series-parallel to form the battery module 6. Then a plurality of battery modules 6 are connected in series or in parallel or in series-parallel connection as a whole body and are accommodated in the box.

The plurality of battery cells 7 in the batteries module 6 can be electrically connected through the confluence component, so that the parallel connection or series connection or series-parallel connection of the plurality of battery cells 7 in the battery modules module 6 is realized. One or a plurality of confluence components can be arranged, and each confluence component is configured to electrically connect at least two battery cells.

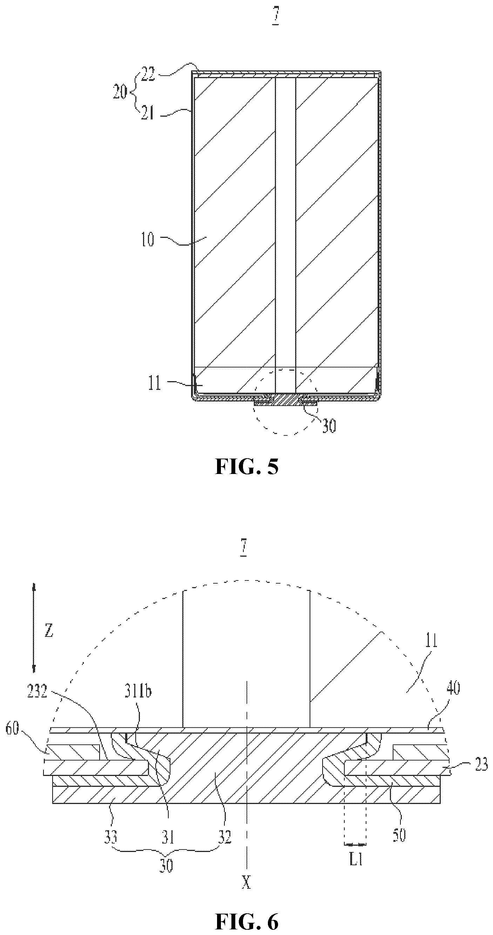

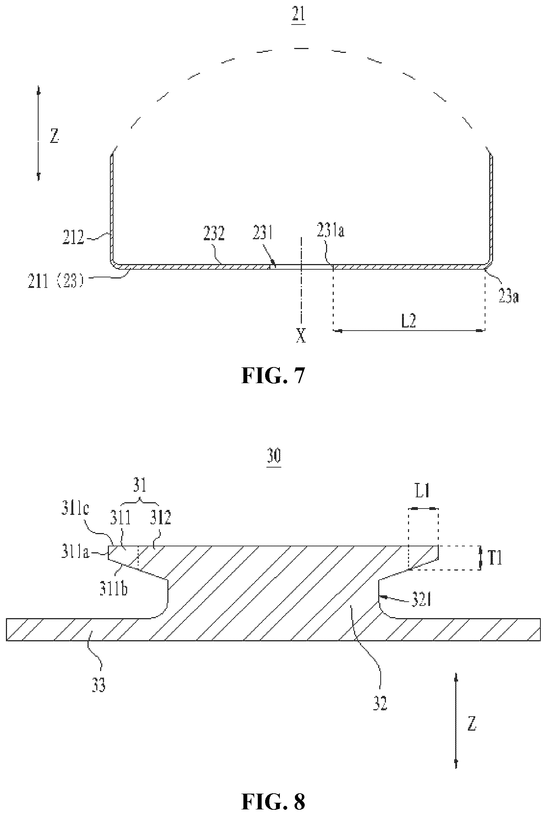

FIG. 4 is a structural schematic diagram of a battery cell provided by some embodiments of the present application; FIG. 5 is a section-view schematic diagram of a battery cell shown in FIG. 4; FIG. 6 is an amplification diagram of a round frame in FIG. 5; FIG. 7 is a partial section-view schematic diagram of a casing body of a battery cell provided by some embodiments of the present application; and FIG. 8 is a section-view schematic diagram of an electrode terminal of a battery cell provided by some embodiments of the present application.

As shown in FIG. 4 to FIG. 8, an embodiment of the present application provides a battery cell 7, which includes the casing 20, an electrode assembly 10 and other functional components (such as an electrode terminal 30 arranged on the casing 20), and at least part of the electrode assembly 10 is accommodated in the casing 20.

The casing 20 is of a hollow structure, and an accommodating space for accommodating the electrode assembly 10 and an electrolyte is formed in the casing 20. The shape of the casing 20 can be determined according to the specific shape of the electrode assembly 10. For example, if the electrode assembly 10 is of a cuboid structure, a cuboid casing can be selected; and if the electrode assembly 10 is of a cylindrical structure, a cylindrical casing can be selected.

As an example, the casing 20 includes a casing body 21 and an end cover 22, in which, the casing body 21 is provided with an opening, and the end cover 22 covers the opening.

The casing body 21 is a component matched with the end cover 22 to form an internal cavity of the battery cell 7, and the formed internal cavity can be used for accommodating the electrode assembly 10, the electrolyte and other components.

The casing body 21 and the end cover 22 can be independent components. Exemplarily, an opening can be formed in the casing body 21, and the end cover 22 covers the opening to form the internal cavity of the battery cell 7.

The shell 21 can be in various shapes and various sizes, such as a cuboid shape, a cylinder shape, and a hexagonal prism shape. Specifically, the shape of the shell 21 can be determined according to the specific shape and the size of the electrode assembly 10. There may be various materials of the casing body 21, such as copper, iron, aluminum, stainless steel and aluminum alloy. There is no special limitation in the embodiment of the present application.

The shape of the end cover 22 can be adapted to the shape of the casing body 21 so as to be matched with the casing body 21. The material of the end cover 22 can be the same as to or different from that of the casing body 21. Optionally, the end cover 22 can be made of a material (such as copper, iron, aluminum, stainless steel, aluminum alloy and plastic) with certain hardness and strength, and therefore, the end cover 22 is unlikely to deform when being extruded and collided, the battery cell 7 can gain higher structural strength, and the reliability can also be improved.

The end cover 22 is connected to the casing body 21 in a welding, bonding, clamping or other way.

One or both ends of the casing body 21 can be opened. In some examples, the casing body 21 can be of a structure with one side opened, and one end cover 22 can be arranged and cover the casing body 21. In some other examples, the casing body 21 can be of a structure with both sides opened, and two end covers 22 are arranged and respectively cover the two openings of the casing body 21.

The electrode terminal 30 can be electrically connected to the electrode assembly 10 to output or input the electric energy of the battery cell 7.

The electrode assembly 10 is a component that can generate an electrochemical reaction in the battery cell 7. The shell 21 may internally include one or more electrode assemblies 10.

As an example, the electrode assembly 10 includes a positive electrode plate and a negative electrode plate. The parts, with active materials, of the positive electrode plate and the negative electrode plate form a main body part of the electrode assembly 10; and the parts, without the active materials, of the positive electrode plate and the negative electrode plate respectively form tabs. Each tab may include a positive electrode tab and a negative electrode tab. A positive electrode tab and a negative electrode tab can be jointly located at one end of the main body part or respectively positioned at two ends of the main body part.

In the charging and discharging process of the battery, a positive electrode active material and a negative electrode active material react with the electrolyte, and the tabs are connected to the electrode terminal 30 to form a current loop.

In some embodiments, the battery cell 7 includes the casing 20, the electrode assembly 10 and the electrode terminal 30. The casing 20 includes a wall portion 23 which is provided with an electrode lead-out hole 231. At least a part of the electrode assembly 10 is accommodated in the casing 20, and the electrode assembly 10 includes a tab 11. The electrode terminal 30 is arranged on the wall portion 23 and covers at least a part of the electrode lead-out hole 231, and the electrode terminal 30 is electrically connected to the tab 11. At least a part of the electrode terminal 30 can be deformed when the internal pressure or temperature of the casing 20 reaches a threshold, so that the internal space of the casing 20 is communicated with the external space by means of the electrode lead-out hole 231, and gas in the casing 20 can be discharged.

As an example, the wall portion 23 can be an end cap 22 or one wall of the casing body 21.

As an example, the wall portion 23 can be circular, rectangular, elliptical or in other shapes.

As an example, the electrode lead-out hole 231 penetrates through the wall portion 23, so that the electrode terminal 30 can conveniently lead electric energy of the electrode assembly 10 to the outside of the casing 20. Optionally, the electrode lead-out hole 231 penetrates through the wall portion 23 in the thickness direction Z of the wall portion 23.

The tab 11 electrically connected to the electrode terminal 30 can be a positive electrode tab or a negative electrode tab.

The tab 11 can be directly connected to the electrode terminal 30, for example, the tab is connected to the electrode terminal 30 by welding, abutting or other modes. Alternatively, the tab 11 can be indirectly connected to the electrode terminal 30 by means of other conductive components (such as a current collecting component 40), so that the tab 11 can be electrically connected to the electrode terminal 30.

The material of the electrode terminal 30 can be the same as or different from that of the wall portion 23. As an example, the electrode terminal 30 and the wall portion 23 can be made of different materials, and the melting point of the electrode terminal 30 can be the same as or different from that of the wall portion 23.

The electrode terminal 30 can cover only a part of the electrode lead-out hole 231, or cover the whole electrode lead-out hole 231. As an example, the electrode terminal 30 can independently close the electrode lead-out hole 231 so as to isolate the internal space of the casing 20 from the external space, and thus the sealing performance of the battery cell 7 is improved; and alternatively, the electrode terminal 30 can be matched with other functional components (such as a sealing member 50) to close the electrode lead-out hole 231 together, thus the internal space of the casing 20 is isolated from the external space, and the sealing performance of the battery cell 7 is improved.

The threshold design is different according to design requirements. The threshold may depend on one or more materials of a positive electrode, a negative electrode, the electrolyte and a spacer in the battery cell 7.

Under the condition that the internal pressure or temperature of the casing 20 reaches the threshold, the deformation of the electrode terminal 30 includes but is not limited to bending, cracking, shrinkage, melting and the like.

In a case of short circuit or overcharge or other phenomena, the electrolyte and an active substance will react and release gas and heat.

In the embodiments of the present application, the deformation of the electrode terminal 30 can be triggered only by the internal pressure of the casing 20, or only by the internal temperature of the casing 20, or by the internal pressure and temperature of the casing 20 in a combined manner.

As an example, with the continuous accumulation of gas in the casing 20, the internal pressure of the casing 20 can reach or even exceed the pressure threshold. Under the condition that the internal pressure of the casing 20 reaches the threshold, the electrode terminal 30 deforms with the internal pressure, thus the internal space of the casing 20 is communicated with the external space by means of the electrode lead-out hole 231, and the gas in the casing 20 can be discharged through the electrode lead-out hole 231, thereby reducing the risk of explosion of the battery cell 7.

As an example, when the electrolyte and the active substance react and release heat quickly, the internal temperature of the casing 20 will increase, and the temperature increase may cause the rise of the internal pressure of the casing 20. Under the condition that the internal temperature of the casing 20 reaches the threshold, the electrode terminal 30 can deform with the temperature and pressure, thus the internal space of the casing 20 can be communicated with the external space by means of the electrode lead-out hole 231, and the gas in the casing 20 can be discharged through the electrode lead-out hole 231, thereby reducing the risk of explosion of the battery cell 7.

**In** the embodiments of the president application, under the condition that the internal pressure or temperature of the casing 20 reaches the threshold, the internal space of the casing 20 can be communicated with the external space by means of the deformation of the electrode terminal 30, thereby discharging the internal gas and pressure of the casing 20, and reducing the risk of explosion of the battery cell 7. Compared with a solution of additionally arranging a pressure relief mechanism on the casing 20, the embodiments of the present application have advantage that the structure of the battery cell 7 can be simplified, thus reducing the cost of the battery cell.

**In** some embodiments, at least a part of the electrode terminal 30 can be isolated from the wall portion 23 under the condition that the internal pressure or temperature of the casing 20 reaches the threshold.

Under the condition that the internal pressure or temperature of the casing 20 reaches the threshold, the electrode terminal 30 can be wholly isolated from the wall portion 23 or only partially isolated from the wall portion 23.

That at least a part of the electrode terminal 30 is isolated from the wall portion 23 refers to that at least a part of the electrode terminal 30 is not restrained by the wall portion 23 any more and can deviate from an initial set position.

When at least a part of the electrode terminal 30 is isolated from the wall portion 23, at least part of the electrode lead-out hole 231 is not covered by the electrode terminal 30 any more, and the electrode lead-out hole 231 can communicate the internal space of the casing 20 with the external space, so that the internal gas of the battery cell 7 can be discharged, and the internal pressure and temperature of the battery cell 7 can be reduced.

**In** some embodiments, under the condition that the internal pressure or temperature of the casing 20 reaches the threshold, the electrode terminal 30 can be wholly isolated from the wall portion 23.

**In** a case of short circuit or overcharge or other phenomena, the electrode terminal 30 can be isolated from the wall portion 23, so that the electrode lead-out hole 231 is not shielded by the electrode terminal 30 any more, then the gas discharge rate is increased, and the explosion risk of the battery cell 7 is reduced.

**In** some embodiments, the casing 20 includes the casing body 21 and the end cover 22, one end of the casing body 21 is provided with an opening, and the end cover 22 covers the opening. The casing body 21 includes a side wall 212 and an end wall 211, in which, the side wall 212 surrounds the outer side of the electrode assembly 10, the end wall 211 is opposite to the opening, and the wall portion 23 is the end cover 22 or the end wall 211.

One or a plurality of side walls 212 can be arranged. **In** some examples, one side wall 212 can be provided and can be of a cylindrical structure. **In** some other examples, the plurality of side walls 212 can be provided and are sequentially connected in the circumferential direction of the electrode assembly 10; and for example, four side walls 212 are provided and are sequentially connected to form a square cylinder structure.

**In** some embodiments, the battery cell 7 is a cylindrical battery cell, and one side wall 212 is provided and is of a cylindrical structure. The end cover 22 or the end wall 211 is flatter than the side wall 212, so the electrode terminal 30 can be arranged on the end cover 22 or the end wall 211 to improve the assembling efficiency of the battery cell 7.

**In** some embodiments, the casing body 21 is of an integrally-formed structure, and the wall portion 23 is the end wall 211.

**In** some embodiments, the melting point of the electrode terminal 30 is smaller than that of the wall portion 23.

**In** a case of short circuit or overcharge or other phenomena, the internal temperature of the casing 20 will rapidly increase. The electrode terminal 30 has a lower melting point than the wall portion 23, so the electrode terminal 30 can be melted or softened prior to the wall portion 23, which is conducive to the implementation of directional pressure relief of the battery cell 7.

**In** addition, when connecting the electrode terminal 30 to other components by welding, the lower melting point of the material of the electrode terminal 30 is beneficial to reducing the welding temperature, and the adverse effect of the welding process on the wall portion 23 can be reduced due to the relatively higher melting point of the material of the wall portion 23, so that the risk of electrolyte leakage can be reduced.

In some embodiments, the melting point of the electrode terminal 30 is H1, the melting point of the wall portion 23 is H2, and H2-H1≥300°C.

In a case of short circuit or overcharge or other phenomena, the internal temperature of the casing 20 is uneven; in the embodiments of the present application, there may be a large difference between the melting point of the electrode terminal 30 and the melting point of the wall portion 23, so the risk that the wall portion 23 is melted prior to the electrode terminal 30 due to uneven internal temperature can be reduced, and the reliability of the battery cell 7 can be improved.

Optionally, H2-H1≥500°C.

In some embodiments, the materials of the electrode terminal 30 include aluminum or copper, and the materials of the wall portion 23 include steel. As an example, the materials of the wall portion 23 may be stainless steel, nickel-plated steel or other materials with steel as a main body.

The main material of the wall portion 23 is steel, so the wall portion 23 has good mechanical strength and high temperature resistance, and the risk that the wall portion 23 is melted and broken when the battery cell 7 is out of heat control is reduced. The material of the electrode terminal 30 has a lower melting point, so when the battery cell 7 is out of heat control, the electrode terminal 30 is softened and deformed more easily, the internal space of the casing 20 can be communicated with the external space through the electrode lead-out hole 231 in time, the explosion risk can be reduced, and the reliability of the battery cell 7 can be improved.

In some embodiments, the battery cell 7 further includes the current collecting component 40, and the current collecting component 40 is connected to the electrode terminal 30 and the tab 11. Optionally, under the condition that the internal pressure or temperature of the casing 20 reaches the threshold, the electrode terminal 30 is disconnected from the current collecting component 40 and is isolated from the wall portion 23.

In some embodiments, the current collecting component 40 can be connected to the tab 11 by welding, abutting, bonding or other modes, and is connected to the electrode terminal 30 by welding, abutting, bonding or other modes, thereby realizing electric connection between the electrode terminal 30 and the tab 11.

The current collecting component 40 is made of a conductive material, for example, the current collecting component 40 is made of conductive metal.

In some embodiments, the surface of the current collecting component 40 deviating from the wall portion 23 abuts against the tab 11, and the surface of the current collecting component 40 facing the wall portion 23 abuts against the electrode terminal 30.

In some embodiments, the current collecting component 40 is welded to the tab 11. As an example, the current collecting component 40 is connected to the tab 11 by ultrasonic welding, laser welding or other welding modes.

In some embodiments, the main material of the current collecting component 40 is the same as that of the tab 11.

In some examples, the main material of the current collecting component 40 is aluminum, and the main material of the tab 11 is aluminum; for example, the material of the current collecting component 40 is aluminum alloy, and the material of the tab 11 is aluminum foil.

In some other examples, the main material of the current collecting component 40 is copper, and the main material of the tab 11 is copper; for example, the material of the current collecting component 40 is copper alloy, and the material of the tab 11 is copper foil. The main material of the current collecting component 40 is the same as that of the tab 11, thus the welding strength of the current collecting component 40 and the tab **11** can be improved, the resistance is reduced, and the overcurrent capacity is improved.

**In** some embodiments, the current collecting component 40 is welded to the electrode terminal 30. As an example, the current collecting component 40 is connected to the electrode terminal 30 by laser welding, resistance welding, ultrasonic torque welding or other welding modes.

**In** some embodiments, the main material of the current collecting component 40 is the same as that of the electrode terminal 30.

**In** some examples, the main material of the current collecting component 40 is aluminum, and the main material of the electrode terminal 30 is aluminum; for example, the materials of both the electrode terminal 30 and the current collecting component 40 are aluminum alloy.

**In** some other examples, the main material of the current collecting component 40 is copper, and the main material of the electrode terminal 30 is copper; for example, the materials of both the electrode terminal 30 and the current collecting component 40 are copper alloy.

In some embodiments, under the condition that the internal temperature of the casing 20 reaches the threshold, the strength of a weld mark between the electrode terminal 30 and the current collecting component 40 is reduced, and under the internal pressure of the casing 20, the electrode terminal 30 and the current collecting component 40 are torn apart to relieve the constraint of the current collecting component 40 on the electrode terminal 30, thereby isolating the electrode terminal 30 from the wall portion 23.

In some embodiments, under the condition that the internal pressure or temperature of the casing 20 reaches the threshold, the weld mark between the electrode terminal 30 and the current collecting component 40 is torn apart, and the weld mark between the tab 11 and the current collecting component 40 maintains a fixed connection between the tab 11 and the current collecting component 40, thereby reducing the risk that the current collecting component 40 blocks the electrode lead-out hole 231.

In some embodiments, the electrode terminal 30 includes a protrusion 311 protruding out of a hole wall 231a of the electrode lead-out hole 231 in a radial direction of the electrode lead-out hole 231, and the protrusion 311 is located on the side of the wall portion 23 facing the electrode assembly 10.

The radial direction of the electrode lead-out hole 231 may be a direction passing through a central axis X of the electrode lead-out hole 231 and perpendicular to the central axis X of the electrode lead-out hole 231. Optionally, the central axis X of the electrode lead-out hole 231 is parallel to a thickness direction Z of the wall portion 23.

The central axis X of the electrode lead-out hole 231 is an integrally virtual line. As an example, the electrode lead-out hole 231 is rotationally symmetrical about the central axis.

**In** some examples, the electrode lead-out hole 231 may be a circular hole, and the radial direction of the electrode lead-out hole 231 may be a radial direction of the electrode lead-out hole 231; and in some other examples, the electrode lead-out hole 231 may be a square hole, and the radial direction of the electrode lead-out hole 231 may be a radial direction of a circumscribed circle of the electrode lead-out hole 231.

That the protrusion 311 protrudes out of the hole wall 231a of the electrode lead-out hole 231 may refer to that a projection of the protrusion 311 does not overlap with a projection of the electrode lead-out hole 231 in the thickness direction Z of the wall portion 23.

One or a plurality of protrusions 311 may be arranged. In some examples, one protrusion 311 is provided and is annular; and in some other examples, the plurality of the protrusions 311 are provided and are arranged at intervals in the circumferential direction of the electrode lead-out hole 231.

During the normal operation process of the battery cell 7, the wall portion 23 can block the protraction 311 to reduce the risk that the electrode terminal 30 falls off from the electrode lead-out hole 231.

In some embodiments, the protrusion 311 can deform under the condition that the internal pressure or temperature of the casing 20 reaches the threshold.

The deformation of the protrusion 311 includes but is not limited to breakage, bending, melting and the like.

Under the condition that the internal pressure or temperature of the casing 20 reaches the threshold, the protrusion 311 can deform to make the wall portion 23 do not block the protrusion 311, thus the electrode terminal 30 can fall off from the electrode lead-out hole 231, the internal space of the casing 20 can be communicated with the external space by means of the electrode lead-out hole 231, gas in the casing 20 can be discharged through the electrode lead-out hole 231, and the risk of explosion of the battery cell 7 is reduced.

Exemplarily, under the condition that the internal pressure or temperature of the casing 20 reaches the threshold, the electrode terminal 30 moves outwards by means of the electrode lead-out hole 231 with the internal pressure; and in the moving process of the electrode terminal 30, the protrusion 311 is folded and deformed by the resistance of the wall portion 23, so that the protrusion 311 can penetrate out from the electrode lead-out hole 231.

In some embodiments, the maximum size of the protrusion 311 protruding out of the hole wall 231a of the electrode lead-out hole 231 is L1, and the minimum space between a circumferential edge 23a of the wall portion 23 and the hole wall 231a of the electrode lead-out hole 231 is L2. L1 and L2 meet: 0.1≤L1/L2≤0.5.

As an example, L1 can be the maximum size of the protrusion 311 protruding out of the hole wall 231a of the electrode lead-out hole 231 in the radial direction of the electrode lead-out hole 231. As an example, L2 can be the minimum space between the circumferential edge 23a of the wall portion 23 and the hole wall 231a of the electrode lead-out hole 231 in the radial direction of the electrode lead-out hole 231.

As an example, under the condition that the wall portion 23 is the end cover 22, the circumferential edge 23a of the wall portion 23 can be the peripheral edge of the end cover 22; and under the condition that the wall portion 23 is the end wall 211, the circumferential edge 23a of the wall portion 23 can be a joint of the end wall 211 and the side wall 212.

The value of L1/L2 is positively correlated with the area of the protrusion 311 blocked by the wall portion 23; the greater the L1/L2 is, the higher the deformation difficulty of the protrusion 311 with internal pressure is; and the smaller the L1/L2 is, the lower the stability of the electrode terminal 30 on the wall portion 23 is.

In the embodiments of the present application, the value of L1/L2 is limited to be less than or equal to 0.5, thus deformation can be caused in time when the internal pressure or temperature of the casing 20 reaches the threshold, and the reliability of the battery cell 7 can be improved. In the embodiments of the present application, the value of L1/L2 is limited to be greater than or equal to 0.1, so that the stability of the electrode terminal 30 on the wall portion 23 can be improved, and the risk that the electrode terminal 30 falls off when the battery cell 7 is subjected to external impact is reduced.

Optionally, the value of L1/L2 is 0.1, 0.2, 0.3, 0.4 or 0.5.

Optionally, the value of L1/L2 is 0.2-0.3.

In some embodiments, the maximum size of the protrusion 311 protruding out of the hole wall 231a of the electrode lead-out hole 231 is L1, and the maximum thickness of the protrusion 311 is T1. L1 and T1 meet: 0.25mm²≤L1×T1≤25mm².

L1 and T1 both affect the deformation difficulty of the protrusion 311. The greater the L1 is, the higher the strength of the protrusion 311 is, and the higher the deformation difficulty of the protrusion 311 is; and similarly, the greater the T1 is, the higher the strength of the protrusion 311 is, and the higher the deformation difficulty of the protrusion 311 is.

In the embodiments of the present application, the value of L1xT1 is limited to be less than or equal to 25 mm², so that deformation can be caused in time when the internal pressure or temperature of the casing 20 reaches the threshold, and the reliability of the battery cell 7 is improved. In the embodiments of the present application, the value of L1xT1 is limited to be greater than or equal to 0.25 mm², so that the stability of the electrode terminal 30 on the wall portion 23 can be improved, and the risk that the electrode terminal 30 falls off when the battery cell 7 is subjected to external impact is reduced.

Optionally, the value of L1xT1 is 0.25 mm², 0.5 mm², 1 mm², 5 mm², 8 mm², 10 mm², 15 mm², 20 mm² or 25 mm².

Optionally, the value of L1xT1 is 1mm²≤L1×T1≤5mm².

In some embodiments, T1 is 0.5-5 mm. As an example, T1 is 0.5 mm, 0.8 mm, 1 mm, 1.5 mm, 2 mm, 2.5 mm, 3 mm, 4 mm or 5 mm.

In the embodiments of the present application, T1 is limited to be 0.5-5 mm, deformation can be caused in time under the condition that the internal pressure or temperature of the casing 20 reaches the threshold, and the risk that the electrode terminal 30 falls off when the battery cell 7 is subjected to external impact is reduced.

In some embodiments, L1 is 0.5-5 mm. As an example, L1 is 0.5 mm, 0.8 mm, 1 mm, 1.5 mm, 2 mm, 2.5 mm, 3 mm, 4 mm or 5 mm.

In some embodiments, in the direction from a central axis X of the electrode lead-out hole 231 to the peripheral edge 311a of the protrusion 311, the thickness of at least a part of the protrusion 311 is gradually reduced.

The protrusion 311 includes a thickness-variable area with gradually reduced thickness, the thickness of the end of the thickness-variable area close to the central axis X of the electrode lead-out hole 231 is maximum, and the thickness of the end of the thickness-variable area close to the peripheral edge 311a of the protrusion 311 is minimum.

According to the present application, the protrusion 311 is provided with the thickness-variable area with gradually reduced thickness, so that the protrusion 311 can be deformed more easily with internal pressure, pressure relief can be carried out in time, and the reliability of the battery cell 7 is improved.

**In** some embodiments, the protrusion 311 is provided with a first surface 311b facing the wall portion 23, the wall portion 23 is provided with the second surface 232 facing the protrusion 311, in which, the second surface 232 is perpendicular to the thickness direction Z of the wall portion 23, and the first surface 311b is inclined in the direction close to the electrode assembly 10 relative to the second surface 232.

Exemplarily, in the thickness direction Z of the wall portion 23, the distance from the end of the first surface 311b away from the electrode lead-out hole 231 to the second surface 232 is greater than the distance from the end of the first surface 311b close to the electrode lead-out hole 231 to the second surface 232.

Under the condition that the internal pressure or temperature of the casing 20 reaches the threshold, the inclined first surface 311b can guide the protrusion 311 to deform so as to penetrate out more easily through the electrode lead-out hole 231, thus pressure relief can be carried out in time, and the reliability of the battery cell 7 can be improved.

**In** some embodiments, the protrusion 311 is provided with a third surface 311c deviating from the wall portion 23, and the third surface 311c is parallel to the second surface 232. In the direction from the central axis X of the electrode lead-out hole 231 to the peripheral edge 311a of the protrusion 311, the thickness of the protrusion 311 is gradually reduced.

In some embodiments, the electrode terminal 30 includes a terminal body 32 and a first limiting portion 31 which are connected to each other, in which, at least part of the terminal body 32 is accommodated in the electrode lead-out hole 231, and the first limiting portion 31 is positioned on the side of the wall portion 23 facing the electrode assembly 10 and protrudes out of a peripheral surface 321 of the terminal body 32. The first limiting portion 31 includes the protrusion 311.

The first limiting portion 31 can only include the protrusion 311, and can also include other portions except the protrusion 311.

One or a plurality of first limiting portions 31 can be provided. Optionally, one first limiting portion 31 is provided and is of a circular ring structure.

The terminal body 32 extends into the electrode lead-out hole 231, so that the electrode terminal 30 can be conveniently connected to other components outside the battery cell 7. The wall portion 23 blocks the protrusion 311, so that the electrode terminal 30 is limited to be isolated from the interior of the casing 20.

In some embodiments, the electrode terminal 30 further includes a second limiting portion 33; the second limiting portion 33 protrudes out of the peripheral surface 321 of the terminal body 32 and is arranged on the outer side of the wall portion 23. In the thickness direction Z of the wall portion 23, at least part of the wall portion 23 is positioned between the protrusion 311 and the second limiting portion 33.

The wall portion 23 can be limited between the first limiting portion 31 and the second limiting portion 33 to limit the relative movement between the electrode terminal 30 and the wall portion 23.

In some embodiments, in the radial direction of the electrode lead-out hole 231, an end portion of the second limiting portion 33 far away from the terminal body 32 exceeds an end portion of the first limiting portion 31 far away from the terminal body 32.

In the radial direction of the electrode lead-out hole 231, the second limiting portion 33 has a relatively large size relative to the first limiting portion 31, which increases the exposed area of the electrode terminal 30, facilitates the connection between the electrode terminal 30 and an external confluence component, increases the connection area between the electrode terminal 30 and the confluence component, and improves the overcurrent capability. In the radial direction of the electrode lead-out hole 231, the first limiting portion 31 has a relatively large size relative to the second limiting portion 33, so that the first limiting portion 31 is more easily deformed under the condition that the internal pressure or temperature of the casing 20 reaches the threshold, pressure relief can be carried out in time, and the reliability of the battery cell 7 can be improved.

In some embodiments, the first limiting portion 31, the second limiting portion 33 and the terminal body 32 are of an integrally-formed structure. In the embodiments of the present application, the overall structural strength of the electrode terminal 30 can be improved, the internal resistance of the electrode terminal 30 can be reduced, and the overcurrent capacity can be improved.

In some embodiments, the battery cell 7 further includes a sealing member 50, and at least part of the sealing member 50 is arranged between the first limiting portion 31 and the wall portion 23.

As an example, the electrode terminal 30 and the sealing member 50 jointly isolate the internal space of the casing 20 from the external space, thereby improving the sealing performance of the battery cell 7.

The sealing member 50 can fill a gap between the first limiting portion 31 and the wall portion 23 so as to seal the electrode lead-out hole 231.

In some embodiments, the portion of the sealing member 50 clamped between the first limiting portion 31 and the wall portion 23 is compressed so as to seal the electrode lead-out hole 231.

In some embodiments, a part of the sealing member 50 is arranged between the second limiting portion 33 and the wall portion 23.

In some embodiments, a part of the sealing member 50 is arranged in the electrode lead-out hole 231 and isolates the hole wall 231a of the electrode lead-out hole 231 from the terminal body 32.

In some embodiments, the sealing member 50 is made of an insulating material. The sealing member 50 can insulate and isolate the wall portion 23 from the electrode terminal 30.

In some embodiments, the battery cell 7 further includes an insulating component 60, and the insulating component 60 is arranged on the surface of the wall portion 23 facing the electrode assembly 10. The insulating component 60 can be configured to insulate and isolate at least part of the electrode assembly 10 from the wall portion 23.

In some embodiments, the projection of the wall portion 23 in the thickness direction Z of the wall portion 23 is in a circular ring shape. Optionally, the battery cell 7 is a cylindrical battery cell.

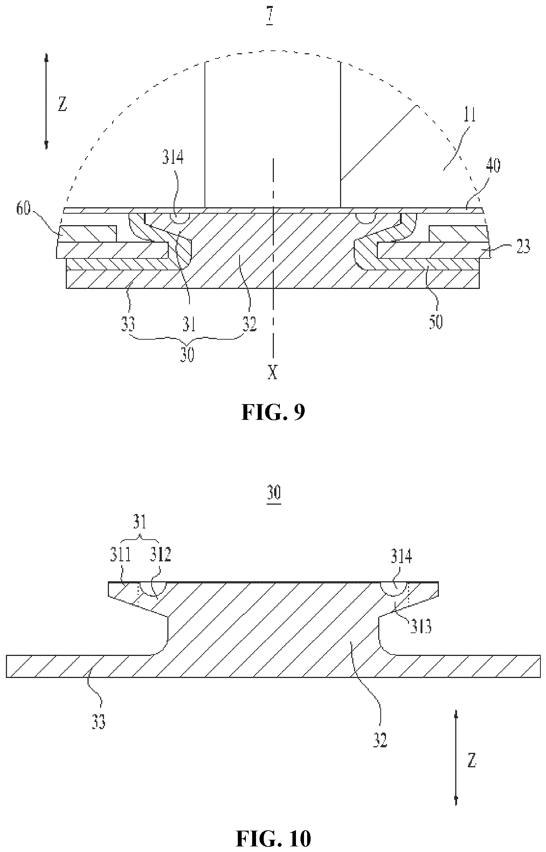

FIG. 9 is a local sectional-view schematic diagram of a battery cell provided by some embodiments of the present application; and FIG. 10 is a schematic diagram of an electrode terminal shown in FIG. 9.

As shown in FIG. 9 and FIG. 10, in some embodiments, the first limiting portion 31 is provided with a weak portion 313, and the first limiting portion 31 can be bent or broken along the weak portion 313 under the condition that the internal pressure or temperature of the casing 20 reaches the threshold.

The weak portion 313 is a portion, with relatively low strength, of the first limiting portion 31, and is a portion, which is easy to break or bend, of the first limiting portion 31. Exemplarily, the strength of the weak portion 313 is lower than that of the portion of the first limiting portion 31 close to the weak portion 313.

In some examples, in the present application, a groove, a nick, a through hole or other structures can be formed in a preset area of the first limiting portion 31 to reduce the local strength of the first limiting portion 31, and then the weak portion 313 can be formed on the first limiting portion 31. For example, thinning treatment is performed on the preset area of the first limiting portion 31, and the thinned part of the first limiting portion 31 forms the weak portion 313. In some other examples, material treatment can be performed on the preset area of the first limiting portion 31, so that the strength of the area is lower than that of other areas, namely the area is the weak portion 313.

As an example, the weak portion 313 can be wholly arranged on the protrusion 311, and can also be only partially arranged on the protrusion 311. In an alternative example, the weak portion 313 can be wholly arranged on the portion of the first limiting portion 31, except the protrusion 311.

The weak portion 313 is arranged on the first limiting portion 31, so the difficulty in deformation of the first limiting portion 31 can be reduced under the condition that the internal pressure or temperature of the casing 20 reaches the threshold, the first limiting portion 31 can be bent or broken at the preset position, then the internal space of the casing 20 can be communicated with the external space through the electrode lead-out hole 231, and the risk of explosion of the battery cell 7 is reduced.

In some embodiments, at least a part of the projection of the weak portion 313 in the thickness direction Z of the wall portion 23 is within the electrode lead-out hole 231.

The projection of the weak portion 313 in the thickness direction Z is at least partially overlapped with the projection of the electrode lead-out hole 231 in the thickness direction Z.

In the embodiments of the present application, under the condition that the internal pressure or temperature of the casing 20 reaches the threshold, the bent part of the first limiting portion 31 is close to the electrode lead-out hole 231, and thus the first limiting portion 31 can penetrate out of the electrode lead-out hole 231 more easily.

In some embodiments, the first limiting portion 31 includes the protrusion 311 and a connecting portion 312; the connecting portion 312 is configured to connect the protrusion 311 to the terminal body 32; and the projection of the connecting portion 312 in the thickness direction Z of the wall portion 23 is between the peripheral surface 321 of the terminal body 32 and the hole wall 231a of the electrode lead-out hole 231. The weak portion 313 is arranged on the connecting portion 312.

In some examples, a part of the connecting portion 312 is the weak portion 313; and in alternative embodiments, the whole connecting portion 312 is the weak portion 313.

The projection of the weak portion 313 in the thickness direction Z of the wall portion 23 is within the electrode lead-out hole 231.

Exemplarily, under the condition that the internal pressure or temperature of the casing 20 reaches the threshold, the protrusion 311 can be turned over along with the bending of the weak portion 313 so as to avoid the wall portion 23 and penetrate out of the electrode lead-out hole 231. In the embodiments of the present application, the weak portion 313 is arranged on the connecting portion 312, so that the limitation on the strength of the protrusion 311 can be reduced, and the shape of the protrusion 311 is more flexible in design.

Exemplarily, under the condition that the internal pressure or temperature of the casing 20 reaches the threshold, the first limiting portion 31 can be broken along the weak portion 313, so that the wall portion 23 does not limit the terminal body 32 through the protrusion 311 any more, and the terminal body 32 can penetrate out of the electrode lead-out hole 231.

In some embodiments, the electrode terminal 30 is provided with a notch groove 314, and the weak portion 313 is formed at the bottom of the notch groove 314. The weak portion 313 is formed in a mode of forming the notch groove 314, so that the forming efficiency of the electrode terminal 30 can be improved.

In some embodiments, the notch groove 314 is formed in the surface of the first limiting portion 31 deviating from the wall portion 23.

Under the condition that the internal pressure or temperature of the casing 20 reaches the threshold, the notch groove 314 can provide a space for the material to flow, which is conducive to the bending of the first limiting portion 31.

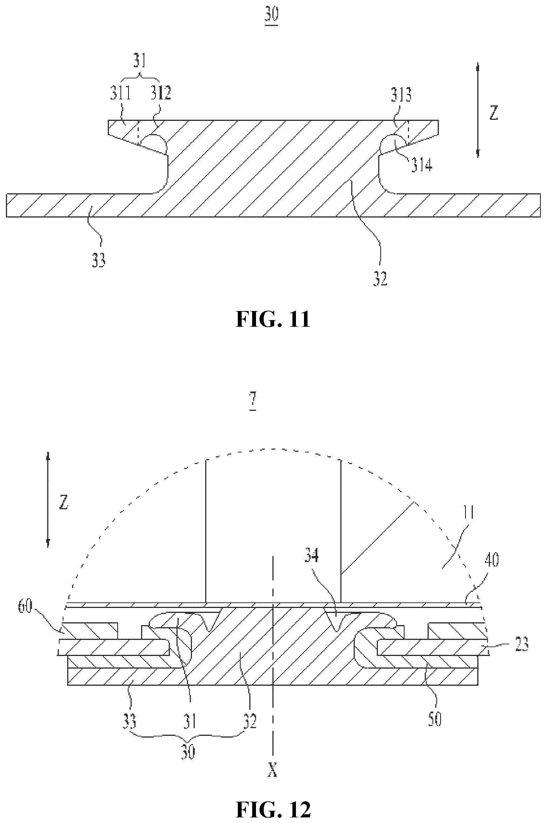

FIG. 11 is a section-view schematic diagram of an electrode terminal of a battery cell provided by some other embodiments of the present application.

As shown in FIG. 11, in some embodiments, the notch groove 314 is formed in the surface of the first limiting portion 31 facing the wall portion 23.

In some embodiments, the surface of the first limiting portion 31 deviating from the wall portion 23 abuts against the current collecting component 40. The notch groove 314 is formed in the surface of the first limiting portion 31 facing the wall portion 23, and therefore, the influence of the notch groove 314 on the contact area of the first limiting portion 31 and the current collecting component 40 can be reduced, and the overcurrent capacity is improved.

In some embodiments, a part of the sealing member 50 is filled in the notch groove 314.

In some embodiments, one notch groove 314 is formed in the surface of the first limiting portion 31 facing the wall portion 23, and the other notch groove 314 is formed in the surface of the first limiting portion 31 deviating from the wall portion 23; and the weak portion 313 is formed between the two notch grooves 314.

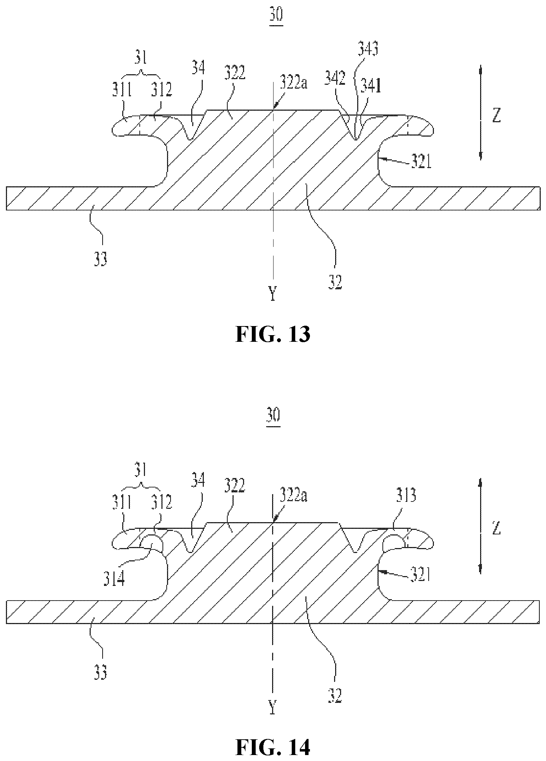

FIG. 12 is a local section-view schematic diagram of a battery cell provided by some embodiments of the present application; and FIG. 13 is a section-view schematic diagram of an electrode terminal shown in FIG. 12.

As shown in FIG. 12 and FIG. 13, in some embodiments, the electrode terminal 30 is provided with a recess 34. The recess 34 is sunken from the interior of the casing 20 to the exterior of the casing 20 in the thickness direction Z of the wall portion 23. At least a part of the recess 34 is arranged on the side of the terminal body 32 facing the tab 11.

Under the condition that the internal pressure or temperature of the casing 20 reaches the threshold, the first limiting portion 31 is bent; and the recess 34 can provide a space for the material to flow in the bending process of the first limiting portion 31, so that the bending resistance of the first limiting portion 31 is reduced, and the first limiting portion 31 can penetrate out of the electrode lead-out hole 231 in time.

**In** some embodiments, the recess 34 includes a first side surface 341 and a second side surface 342, in which, the first side surface 341 is arranged on the outer side of the second side surface 342 in the radial direction of the electrode lead-out hole 231, and the first side surface 341 is connected to the bottom surface 343 of the recess 34 and is inclined towards the side far away from the central axis Y of the electrode terminal 30.

Exemplarily, that the first side surface 341 is arranged on the outer side of the second side surface 342 refers to that in the radial direction of the electrode lead-out hole 231, the first side surface 341 is located on the side of the second side surface 342 far away from the central axis Y of the electrode terminal 30.

A bottom surface 343 of the recess 34 may be a plane or a curved surface. Exemplarily, the first side surface 341 and the second side surface 342 are respectively connected to two ends of the bottom surface 343.

Exemplarily, the central axis Y of the electrode terminal 30 may be parallel to the central axis X of the electrode lead-out hole 231.

Optionally, the central axis Y of the electrode terminal 30 may coincide with the central axis X of the electrode lead-out hole 231, definitely, due to poor process, the central axis Y of the electrode terminal 30 may deviate from the central axis X of the electrode lead-out hole 231 for a distance.

The first side surface 341 is inclined, so that when the first limiting portion 31 is bent, more space is provided for the material to flow, and the bending resistance of the first limiting portion 31 is reduced.

**In** some embodiments, the recess 34 includes the first side surface 341 and the second side surface 342, in which, the first side surface 341 is arranged on the outer side of the second side surface 342 in the radial direction of the electrode lead-out hole 231, and the second side surface 342 is connected to the bottom surface 343 of the recess 34 and is inclined towards the side close to the central axis Y of the electrode terminal 30.

The second side surface 342 is inclined, so that when the first side surface 341 is deformed due to material flowing, the risk of interference between the second side surface 342 and the first side surface 341 is reduced, and the bending resistance of the first limiting portion 31 is reduced.

In some embodiments, the first side surface 341 is connected to the bottom surface 343 of the recess 34 and inclined towards the side far away from the central axis Y of the electrode terminal 30, and the second side surface 342 is connected to the bottom surface 343 of the recess 34 and is inclined towards the side close to the central axis Y of the electrode terminal 30.

In some embodiments, under the condition that the internal pressure or temperature of the casing 20 reaches the threshold, the first limiting portion 31 can be bent in a direction close to the recess 34.

Under the condition that the internal pressure or temperature of the casing 20 reaches the threshold, the first limiting portion 31 is bent in a direction close to the recess 34, so that the material flows towards the recess 34, the bending resistance of the first limiting portion 31 is reduced, and the first limiting portion 31 can penetrate out of the electrode lead-out hole 231 in time.

In some embodiments, the first limiting portion 31 is formed by folding a part of the electrode terminal 30.

During assembling, the electrode terminal 30 can extend into the casing 20 through an electrode lead-out hole 231, and then a part of the electrode terminal 30 is turned over to form the first limiting portion 31, so that the electrode terminal 30 and the wall portion 23 are fixed.

In some embodiments, when the electrode terminal 30 extends into the casing 20 from the outer side through the electrode lead-out hole 231, the electrode terminal 30 can be extruded from the inner side so as to bend a part of the electrode terminal 30 and form the flange-shaped first limiting portion 31.

The recess 34 can be formed in the part of the electrode terminal 30 extruded by an external workpiece.

In some embodiments, the terminal body 32 includes a terminal protrusion 322, and the recess 34 is arranged around the terminal protrusion 322. In the thickness direction Z of the wall portion 23, the end surface 322a of the terminal protrusion 322 facing the tab 11 is closer to the tab 11 than the first limiting portion 31.

In the embodiments of the present application, the first limiting portion 31 does not easily interfere with the abutting of the terminal protrusion 322 and other components (such as the tab 11 or the current collecting component 40), so that over-positioning is reduced, the risk of poor contact between the terminal protrusion 322 and other parts caused by unevenness of the first limiting portion 31 is reduced, and the overcurrent capacity and reliability of the battery cell 7 are improved.

FIG. 14 is a section-view schematic diagram of an electrode terminal of a battery cell provided by some other embodiments of the present application.

As shown in FIG. 14, in some embodiments, the recess 34 is arranged on the side of the terminal body 32 facing the tab 11, and the first limiting portion 31 is provided with the weak portion 313.

The weak portion 313 and the recess 34 are arranged at the same time, so that under the condition that the internal pressure or temperature of the casing 20 reaches the threshold, the bending resistance of the first limiting portion 31 can be further reduced, and the first limiting portion 31 can penetrate out of the electrode lead-out hole 231 in time.

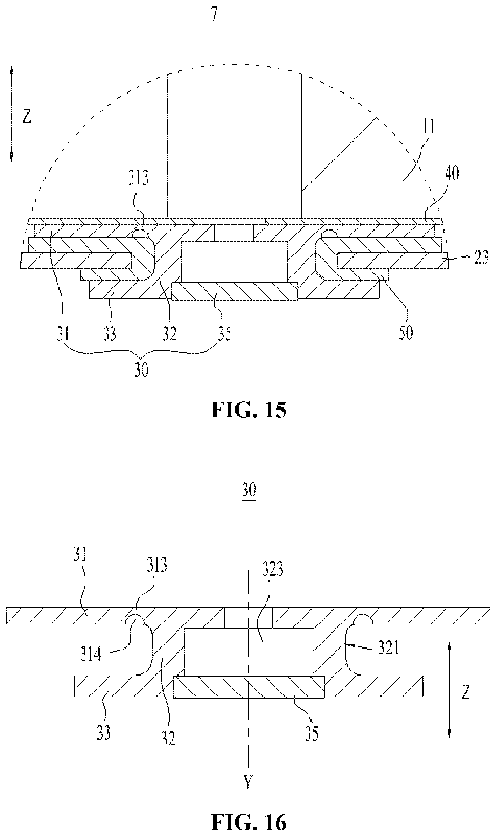

FIG. 15 is a local section-view schematic diagram of a battery cell provided by some other embodiments of the present application; and FIG. 16 is a section-view schematic diagram of an electrode terminal shown in FIG. 15

As shown in FIG. 15 and FIG. 16, in some embodiments, the electrode terminal 30 includes the terminal body 32, the first limiting portion 31 and the second limiting portion 33; at least part of the terminal body 32 is accommodated in the electrode lead-out hole 231, the first limiting portion 31 is located on the side of the wall portion 23 facing the electrode assembly 10 and protrudes out of the peripheral surface 321 of the terminal body 32, and the first limiting portion 31 is located on the side of the wall portion 23 deviating from the electrode assembly 10 and protrudes out of the peripheral surface 321 of the terminal body 32; and in the thickness direction Z, at least part of the wall portion 23 is clamped between the first limiting portion 31 and the second limiting portion 33.

In some embodiments, the first limiting portion 31 is provided with the notch groove 314 to form the weak portion 313.

In some embodiments, the terminal body 32 is provided with a through hole 323, and the electrolyte can be injected through the through hole 323. In some embodiments, the electrode terminal 30 further includes a sealing plate 35, and the sealing plate 35 is connected to the terminal body 32 and seals the through hole 323.

In some embodiments, the terminal body 32, the first limiting portion 31 and the second limiting portion 33 are of an integrated structure, and the sealing plate 35 is welded to the terminal body 32.

In some embodiments, the through hole 323 is a stepped hole. At least part of the sealing plate 35 is accommodated in the through hole 323 and abuts against a stepped surface.

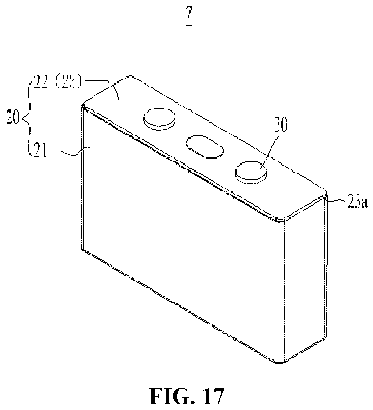

FIG. 17 is a three-dimensional structural schematic diagram of a battery cell provided by some other embodiments of the present application.

As shown in FIG. 17, in some embodiments, the projection of the wall portion 23 in the thickness direction Z is rectangular.

In some embodiments, the battery cell 7 is a square battery cell.

In some embodiments, the wall portion 23 is the end cover 22.

According to some embodiments of the present application, the present application also provides a battery including a plurality of battery cells 7 in any one embodiment above.

According to some embodiments of the present application, the present application also provides an electrical apparatus including a battery cell 7 in any one embodiment above, and the battery cell 7 is configured to providing electric energy for the electrical apparatus. The electrical apparatus can be any one of the devices or systems above using the battery cell 7.

With reference to FIG. 5 to FIG. 8, an embodiment of the present application provide a cylindrical battery cell 7 including the casing 20, the electrode assembly 10, the electrode terminal 30, the current collecting component 40 and the sealing member 50.

The casing 20 includes the casing body 21 and the end cover 22, one end of the casing body 21 is provided with an opening, and the end cover 22 covers the opening. The casing body 21 includes the side wall 212 and the end wall 211, the side wall 212 surrounds the outer side of the electrode assembly 10, and the end wall 211 is arranged opposite to the opening. The end wall 211 is provided with the electrode lead-out hole 231.

The electrode assembly 10 is accommodated in the casing 20 and includes the tab 11, and the electrode terminal 30 is arranged on the end wall 211 and is electrically connected to the tab 11 by means of the current collecting component 40.

The electrode terminal 30 includes the terminal body 32, the first limiting portion 31 and the second limiting portion 33; at least part of the terminal body 32 is accommodated in the electrode lead-out hole 231, the first limiting portion 31 is located on the side of the end wall 211 facing the electrode assembly 10 and protrudes out of the peripheral surface 321 of the terminal body 32, and the first limiting portion 31 is located on the side of the end wall 211 deviating from the electrode assembly 10 and protrudes out of the peripheral surface 321 of the terminal body 32; and in the thickness direction Z, at least part of the end wall 211 is located between the first limiting portion 31 and the second limiting portion 33.

The sealing member 50 separates the electrode terminal 30 from the end wall 211, and the electrode terminal 30 and the sealing member 50 jointly cover the electrode lead-out hole 231 so as to seal the electrode lead-out hole 231.

Under the condition that the internal pressure or temperature of the casing 20 reaches the threshold, the first limiting portion 31 can be bent and deformed, and the electrode terminal 30 can be wholly isolated from the end wall 211, so that the internal space of the casing 20 is communicated with the external space through the electrode lead-out hole 231, and gas in the casing 20 is discharged.

Although the present application is described with reference to the preferred embodiments, without departing from the scope of the present application, various improvements may be made to it and parts therein may be replaced with equivalents, in particular, the various technical features mentioned in each embodiment may be combined in any way, as long as there is no structural conflict. The present application is not limited to the specific embodiments disclosed herein, but includes all technical solutions that fall within the scope of the claims.

## Claims

1. A battery cell, comprising:
a casing which comprises a wall portion that is provided with an electrode lead-out hole;
an electrode assembly, at least a part of the electrode assembly accommodated in the casing, and the electrode assembly comprising a tab; and
an electrode terminal which is arranged on the wall portion and covers at least a part of the electrode lead-out hole, and is electrically connected to the tab,
wherein at least a part of the electrode terminal can deform under a condition in which the internal pressure or temperature of the casing reaches a threshold, so that the internal space of the casing communicates with the external space through the electrode lead-out hole, and gas in the casing is discharged.

2. The battery cell according to claim 1, wherein at least a part of the electrode terminal can be isolated from the wall portion under the condition in which the internal pressure or temperature of the casing reaches the threshold.

3. The battery cell according to claim 1 or 2, wherein the electrode terminal comprises a protrusion that protrudes from a hole wall of the electrode lead-out hole in a radial direction of the electrode lead-out hole, and the protrusion is located on the side of the wall portion facing the electrode assembly and can deform under the condition in which the internal pressure or temperature of the casing reaches the threshold.

4. The battery cell according to claim 3, wherein the maximum size of the protrusion protruding from the hole wall of the electrode lead-out hole is L1, and the minimum space between a circumferential edge of the wall portion and the hole wall of the electrode lead-out hole is L2; and
L1 and L2 meet: 0.1≤L1/L2≤0.5.

5. The battery cell according to claim 3 or 4, wherein
the maximum size of the protrusion protruding from the hole wall of the electrode lead-out hole is L1, and the maximum thickness of the protrusion is T1; and
L1 and T1 meet: 0.25 mm²≤L1×T1≤25 mm².

6. The battery cell according to claim 5, wherein T1 is 0.5-5 mm.

7. The battery cell according to any one of claims 3 to 6, wherein in the direction from a central axis of the electrode lead-out hole to the peripheral edge of the protrusion, the thickness of at least a part of the protrusion gradually decreases.

8. The battery cell according to any one of claims 3 to 7, wherein the protrusion is provided with a first surface facing the wall portion, the wall portion is provided with a second surface facing the protrusion, the second surface is in a direction perpendicular to the thickness direction of the wall portion, and the first surface is inclined in the direction toward the electrode assembly relative to the second surface; and in the thickness direction of the wall portion, the distance from the end of the first surface away from the electrode lead-out hole to the second surface is larger than the distance from the end of the first surface close to the electrode lead-out hole to the second surface.

9. The battery cell according to any one of claims 3 to 8, wherein the electrode terminal comprises a terminal body and a first limiting portion which are connected to each other, at least part of the terminal body is accommodated in the electrode lead-out hole, and the first limiting portion is located on the side of the wall portion facing the electrode assembly and protrudes out of a peripheral surface of the terminal body; and
the first limiting portion comprises the protrusion.

10. The battery cell according to claim 9, wherein the first limiting portion is provided with a weak portion, and the first limiting portion can be bent or broken along the weak portion under the condition in which the internal pressure or temperature of the casing reaches the threshold.

11. The battery cell according to claim 10, wherein at least a part of a projection of the weak portion in the thickness direction of the wall portion is within the electrode lead-out hole.

12. The battery cell according to claim 11, wherein the first limiting portion comprises a protrusion and a connecting portion; the connecting portion is configured to connect the protrusion to the terminal body, and the projection of the connecting portion in the thickness direction of the wall portion is between the peripheral surface of the terminal body and the hole wall of the electrode lead-out hole; and
the weak portion is arranged on the connecting portion.

13. The battery cell according to any one of claims 10 to 12, wherein the electrode terminal is provided with a notch groove, and the weak portion is formed at the bottom of the notch groove.

14. The battery cell according to claim 13, wherein the notch groove is formed in the surface of the first limiting portion facing the wall portion; and/or
the notch groove is formed in the surface of the first limiting portion away from the wall portion.

15. The battery cell according to claim 10 or 11, wherein the electrode terminal is provided with a recess; in the thickness direction of the wall portion, the recess is sunken from the interior of the casing to the exterior of the casing; and at least a part of the recess is arranged on a side of the terminal body facing the tab.

16. The battery cell according to claim 15, wherein the recess comprises a first side surface and a second side surface; and the first side surface is arranged on the outer side of the second side surface in the radial direction of the electrode lead-out hole, and the first side surface is connected to the bottom surface of the recess and is inclined in a direction away from the central axis of the electrode terminal.

17. The battery cell according to claim 15, wherein the recess comprises a first side surface and a second side surface; and the first side surface is arranged on the outer side of the second side surface in the radial direction of the electrode lead-out hole, and the second side surface is connected to the bottom surface of the recess and is inclined in a direction toward the central axis of the electrode terminal.

18. The battery cell according to any one of claims 15 to 17, wherein the first limiting portion can be bent in the direction toward the recess under the condition in which the internal pressure or temperature of the casing reaches the threshold.

19. The battery cell according to any one of claims 15 to 18, wherein the first limiting portion is formed by folding a part of the electrode terminal.

20. The battery cell according to any one of claims 15 to 19, wherein the terminal body comprises a terminal protrusion, and the recess is arranged around the terminal protrusion; and
in the thickness direction of the wall portion, the end surface of the terminal protrusion facing the tab is closer to the tab than the first limiting portion.

21. The battery cell according to any one of claims 9 to 20, wherein the electrode terminal further comprises a second limiting portion, and the second limiting portion protrudes from the peripheral surface of the terminal body and is arranged on the outer side of the wall portion; and
in the thickness direction of the wall portion, at least part of the wall portion is located between the protrusion and the second limiting portion.

22. The battery cell according to claim 21, wherein in the radial direction of the electrode lead-out hole, an end portion of the second limiting portion away from the terminal body exceeds an end portion of the first limiting portion away from the terminal body.

23. The battery cell according to claim 21 or 22, wherein the first limiting portion, the second limiting portion and the terminal body are of an integrally formed structure.

24. The battery cell according to any one of claims 9 to 23, further comprising a sealing member, wherein at least part of the sealing member is arranged between the first limiting portion and the wall portion.

25. The battery cell according to any one of claims 1 to 24, wherein the melting point of the electrode terminal is smaller than that of the wall portion.

26. The battery cell according to claim 25, wherein the melting point of the electrode terminal is H1, the melting point of the wall portion is H2, and H2-H1≥300°C.

27. The battery cell according to any one of claims 1 to 26, wherein the materials of the electrode terminal comprise aluminum or copper, and the materials of the wall portion comprise steel.

28. The battery cell according to any one of claims 1 to 27, wherein the casing comprises a casing body and an end cover, an opening is formed in one end of the casing body and the end cover covers the opening; the casing body comprises a side wall and an end wall; the side wall surrounds the outer side of the electrode assembly; the end wall and the opening are arranged oppositely; and the wall portion is the end cover or the end wall.

29. The battery cell according to any one of claims 1 to 28, wherein the projection of the wall portion in the thickness direction is rectangular or annular.

30. A battery, comprising a plurality of battery cells according to any one of claims 1 to 29.

31. **An** electrical apparatus, comprising the battery according to claim 30, wherein the battery is configured to provide electric energy.
